# EUROPÄISCHE PATENTSCHRIFT

(11) **EP 3 736 024 B1**
(45) Veröffentlichungstag und Bekanntmachung des Hinweises auf die Patenterteilung: **06.07.2022**
(21) Anmeldenummer: 19189345.2
(22) Anmeldetag: 31.07.2019
(51) Int. Cl.: A62C 3/08, A62C 99/00

(54) **VORRICHTUNG UND VERFAHREN ZUM INERTISIEREN EINES RAUMES**
DEVICE AND METHOD FOR INERTISING A ROOM
DISPOSITIF ET PROCÉDÉ D'INERTISATION D'UN ESPACE

(30) Priorität: 08.05.2019 DE 102019003257
(43) Veröffentlichungstag der Anmeldung: 11.11.2020
(73) Patentinhaber: Diehl Aviation Gilching GmbH, 82205 Gilching (DE)
(72) Erfinder: Philipp, Jan Boris, 81673 München (DE)
(74) Vertreter: Diehl Patentabteilung

(56) Entgegenhaltungen:
- WO-A1-2007/054316
- DE-T2- 69 406 399

## Beschreibung

Die vorliegende Erfindung betrifft eine Vorrichtung und ein Verfahren zum Inertisieren oder Aufrechterhalten einer Inertisierung eines Raumes zur Brandverhütung und/oder Brandlöschung, insbesondere zur Verwendung in Luft- oder Raumfahrzeugen.

Im Bereich der Luft- oder Raumfahrzeuge ist ein effektiver Brandschutz durch eingeschränkte Raumverhältnisse und Gewichtsbegrenzungen erschwert. Es ist bekannt, zur Brandverhütung oder zur Brandlöschung eine Inertisierung des zu schützenden Raumes vorzunehmen, d.h. das Raumvolumen mit einem reaktionsträgen Gas zu versehen bzw. den Sauerstoffanteil im Raumvolumen zu reduzieren. Die EP 2 873 443 B1 beschreibt beispielsweise ein Brandschutzsystem für Flugzeuge, bei dem neben der Brandbekämpfung mit einem Flüssiglöschmittel auch die Zumischung eines Inertgases wie zum Beispiel Stickstoff in das Flüssiglöschmittel oder die direkte Zufuhr eines Inertgases in den zu schützenden Raum vorgesehen ist. Für die Bevorratung des Inertgases werden in der Regel Druckgasflaschen verwendet.

Aus der WO 2007/054316 A1 ist ein Feuerlöschsystem zum Löschen eines Feuers bekannt, das eine Brennstoffzelle zum Erzeugen einer mit Stickstoff angereicherten Kathodenabluft aufweist. Die Brennstoffzelle wird mit Luft und Brennstoff versorgt. Innerhalb der Brennstoffzelle wird die Luft dann auf einen bestimmten Sauerstoffgehalt reduziert. Die Abluft wird der Feuerquelle zugeführt.

Aus der DE 694 06 399 T2 ist ein Metall-Luft-Batterie angetriebenes elektrisches Fahrzeug bekannt.

Es ist die Aufgabe der Erfindung, eine Vorrichtung und ein Verfahren zum Inertisieren oder Aufrechterhalten einer Inertisierung eines Raumes zu schaffen, die bei geringem Raum- und Gewichtsbedarf eine effiziente Brandverhütung oder Brandlöschung ermöglichen.

Diese Aufgabe wird gelöst durch die Lehre der unabhängigen Ansprüche. Besonders vorteilhafte Ausgestaltungen und Weiterbildungen der Erfindung sind Gegenstand der abhängigen Ansprüche.

Die erfindungsgemäße Vorrichtung zum Inertisieren oder Aufrechterhalten einer Inertisierung eines Raumes weist eine Metall-Luft-Batterie; einen Zuführkanal zum Zuführen von Luft, der eine Luftquellemit der Metall-Luft-Batterie verbindet; einen Abführkanal zum Abführen von Luft, der die Metall-Luft-Batterie mit einem Raumvolumen des Raumes verbindet; und eine Steuereinheit zum Steuern der elektrochemischen Reaktion der Metall-Luft-Batterie in Abhängigkeit einer Brandsituation innerhalb des Raumes auf. Erfindungsgemäß ist die Steuereinheit derart ausgebildet, dass bei Vorliegen einer Brandsituation innerhalb des Raumes die elektrochemische Reaktion der Metall-Luft-Batterie gestartet wird. Ein entsprechendes Signal, dass eine Brandsituation vorliegt, kann die Steuereinheit von einem Bediener, z.B. einem Piloten oder einem Sensor erhalten.

Vorzugsweise wird die Luftquelle durch den Raum gebildet. Der Zuführkanal verbindet dann ein Raumvolumen des Raumes mit der Metall-Luft-Batterie. Über diesen kann dann die Metall-Luft-Batterie mit Luft aus dem Raum versorgt werden. Des Weiteren können bei Einsatz der Metall-Luft-Batterie in einem Luftfahrzeug insbesondere zur Inertisierung eines Frachtraumes auch das Kabinienbelüftungssystem, weitere Räume oder die Zapfluftanlage als Luftquelle dienen.

Diese Inertisierungsvorrichtung basiert auf dem Gedanken, dem Raumvolumen zur Reduzierung des Sauerstoffanteils ein Inertgas zuzuführen, welches durch eine Metall-Luft-Batterie gebildet wird und dem Raumvolumen durch den Abführkanal zugeleitet wird. Beim Betrieb der Metall-Luft-Batterie wird ein Inertgas produziert, welches arm an Sauerstoff ist bzw. einen niedrigeren Sauerstoffgehalt aufweist als die der Batterie zugeführte Luft. Insbesondere basiert sie auf dem Gedanken, dem Raumvolumen und der darin enthaltenen Luft Sauerstoff zu entziehen und für diesen Sauerstoffentzug aus dem Raumvolumen eine Metall-Luft-Batterie zu verwenden, die durch ihre grundsätzliche Funktionsweise beim Entladen Sauerstoff aus dem Raumvolumen zieht, da die elektrochemische Reaktion der Metall-Luft-Batterie Sauerstoff umsetzt. Durch den Sauerstoffentzug wird in dem zu schützenden Raum ein inertes bzw. reaktionsträges Raumvolumen geschaffen, das sich nur wenig an chemischen Reaktionen beteiligt und daher ein Feuer- oder Explosionsrisiko vermindert bzw. einen existierenden Brand eindämmt. Die Metall-Luft- Batterie ist daher derart dimensioniert, dass durch den Betrieb der Metall-Luft-Batterie das Raumvolumen inertisiert wird und somit insbesondere die Sauerstoffkonzentration innerhalb des Raumvolumens auf ein Niveau herabgesenkt wird, bei dem ein im Raumvolumen vorhandener Brand eingedämmt oder gelöscht wird. Die Metall-Luft-Batterie und das Raumvolumen sind folglich in dieser Hinsicht aufeinander abgestimmt.

Im Vergleich zu Druckgasflaschen mit Inertgas benötigen Metall-Luft-Batterien zum Erzielen derselben Wirkung, d.h. desselben Reduzierungsmaßes des Sauerstoffanteils im Raumvolumen, ein deutlich geringeres Gewicht und deutlich weniger Bauraum. Außerdem ist der Sauerstoffentzug mittels Metall-Luft-Batterie umweltfreundlicher im Vergleich zum Einleiten von zum Beispiel Halon in den Raum, und risikoärmer im Vergleich zum Einleiten von Inertgasen aus Druckgasflaschen mit einem inhärenten Explosionsrisiko.

Die Inertisierungsvorrichtung der Erfindung kann eine oder mehrere Metall-Luft-Batterien aufweisen. Grundsätzlich können für die Inertisierungsvorrichtung der Erfindung beliebige Metall-Luft-Batterien verwendet werden; als Metall können zum Beispiel Aluminium, Magnesium, Lithium, Zink, Silizium, etc. eingesetzt werden.

Die Metall-Luft-Batterie ist mit dem Raumvolumen des Raumes über einen Zuführkanal zum Zuführen von Luft verbunden. Mittels des Zuführkanals wird der Batterie die für die elektrochemische Reaktion notwendige Luft, bzw. der darin enthaltene Sauerstoff zugeführt. Die Metall-Luft-Batterie kann zum Beispiel direkt an einer Raumwand montiert sein, in welchem Fall der Zuführkanal beispielsweise durch eine Wandöffnung gebildet sein kann, oder entfernt von dem Raum platziert sein, in welchem Fall der Zuführkanal beispielsweise durch eine Rohrleitung gebildet sein kann. Vorzugsweise weist die Vorrichtung zusätzlich zum Zuführkanal auch einen Abführkanal auf, mit dem die Metall-Luft-Batterie und der zu inertisierende Raum ebenfalls verbunden sind. Mit dem Abführkanal wird ein sauerstoffarmes Gas, also das bei der elektrochemischen Reaktion gebildete Gas von der Metall-Luft-Batterie in den Raum geführt. Durch die Rückführung des sauerstoffarmen Gases wird insgesamt der Sauerstoffanteil der Luft innerhalb des Raumvolumens gesenkt.

Der zu inertisierende Raum ist ein geschlossener oder abschließbarer Raum. In einer bevorzugten Ausführungsform kann eine Metall-Luft-Batterie zur Inertisierung von und somit Brandbekämpfung in mehreren zu inertisierenden Räumen eingesetzt werden. In diesem Fall werden die Zuführ- bzw. Abführkanäle durch ein Rohrsystem gebildet. Das Rohrsystem weist vorzugsweise Ventile auf, durch die der zu inertisierende Raum bzw. das zu inertisierende Volumen ausgewählt werden kann. Die Ventile sind insbesondere mit der Steuereinheit ansteuerbar und können mit dieser geschlossen oder geöffnet werden.

Die Steuereinheit steuert die elektrochemische Reaktion der Metall-Luft-Batterie zum Beispiel durch direktes Ansteuern der Batterie oder indirekt durch Ansteuern einer mit der Batterie verbundenen Komponente.

In einer Ausgestaltung der Erfindung weist die Inertisierungsvorrichtung als eine mit der Batterie verbundenen Komponente ferner wenigstens einen elektrischen Verbraucher auf, der an die Metall-Luft-Batterie angeschlossen ist, wobei die Steuereinheit zum Steuern eines Betriebs des elektrischen Verbrauchers ausgestaltet ist. Durch ein Starten des Betriebs des elektrischen Verbrauchers kann so die elektrochemische Reaktion der Metall-Luft-Batterie gestartet werden. Der elektrische Verbraucher ist vorzugsweise so dimensioniert, dass der für das Inertisieren des Raumes benötigte Sauerstoffverbrauch der Metall-Luft-Batterie erreicht werden kann. Optional kann auch ein geregelter Verbraucher eingesetzt werden, der unabhängig von der Batteriespannung der Metall-Luft-Batterie eine konstante Leistung hat. Insgesamt sind bei dieser Ausgestaltung also die Metall-Luft-Batterie, das Raumvolumen und der elektrische Verbraucher so dimensioniert und aufeinander abgestimmt, dass bei Betrieb der Metall-Luft-Batterie das Raumvolumen inertisiert wird und somit insbesondere die Sauerstoffkonzentration innerhalb des Raumvolumens auf ein Niveau herabgesenkt wird, bei dem ein im Raumvolumen vorhandener Brand eingedämmt oder gelöscht wird. Nach Erreichen des gewünschten Inertisierungszustands kann der Verbraucher derart betrieben werden, dass dieser Zustand durch den damit verbundenen Betrieb der Metall-Luft-Batterie aufrechterhalten wird. Es erfolgt dabei eine Steuerung des elektrischen Verbrauchers durch die Steuereinheit und damit indirekt auch die Steuerung der elektrochemischen Reaktion der Metall-Luft-Batterie und damit die Produktion von sauerstoffarmem Gas.

In einer weiteren Ausgestaltung ist die Metall-Luft-Batterie, das Raumvolumen und der elektrische Verbraucher so dimensioniert und aufeinander abgestimmt, dass der Betrieb der Metall-Luft-Batterie die Inertisierung des Raumvolumens aufrechterhält.

In einer weiteren Ausgestaltung der Erfindung weist die Inertisierungsvorrichtung eine Kurzschlussschaltung zum wahlweisen Kurzschließen der Metall-Luft-Batterie auf, wobei die Steuereinheit zum Ansteuern der Kurzschlussschaltung ausgestaltet ist. So kann durch ein Kurzschließen der Batterie die elektrochemische Reaktion der Metall-Luft-Batterie gestartet werden. Die Kurzschlussschaltung kann innerhalb oder außerhalb der Metall-Luft-Batterie vorgesehen sein.

Optional können die beiden vorgenannten Ausgestaltungen auch kombiniert werden. D.h. es können auch wenigstens ein elektrischer Verbraucher und eine Kurzschlussschaltung vorgesehen sein.

In einer weiteren Ausgestaltung der Erfindung weist die Inertisierungsvorrichtung ferner einen Lüfter auf, der in dem Zuführkanal oder Abführkanal angeordnet ist, um einen Luftstrom aus dem Raumvolumen zur Metall-Luft-Batterie oder von der Metall-Luft-Batterie in das Raumvolumen zu fördern. Auf diese Weise kann der Sauerstoffentzug aus dem Raumvolumen unterstützt bzw. erleichtert werden. Bei dieser Ausgestaltung kann der Lüfter vorzugsweise aus der Batteriespannung der Metall-Luft-Batterie mit Strom versorgt werden. Der Lüfter ist also dann der mit der Batterie verbundene elektrische Verbraucher. Der Lüfter kann in dieser Ausgestaltung mit der Steuereinheit gesteuert werden und ist somit auch mit dieser verbunden.

Gemäß der Erfindung weist die Inertisierungsvorrichtung ferner einen Elektrolytbehälter zum Speichern eines Elektrolyten und ein Förderelement zum Fördern des Elektrolyten aus dem Elektrolytbehälter in die Metall-Luft-Batterie auf, wobei die Steuereinheit zum Steuern des Förderelements ausgestaltet ist. Der Elektrolytbehälter kann direkt an der Metall-Luft-Batterie oder entfernt von dieser platziert sein. Das Förderelement kann zum Beispiel ein Ventil und/oder eine Pumpe aufweisen, das/die zum Beispiel in einer Leitung oder einer Öffnung zwischen dem Elektrolytbehälter und der Batterie angeordnet ist. Bei dem Elektrolyten handelt es sich bevorzugt um einen wässrigen Elektrolyten (z.B. Salzwasser) oder einen aprotischen Elektrolyten. Bei dieser Ausgestaltung der Inertisierungsvorrichtung wird die Metall-Luft-Batterie erst vor dem Entladevorgang durch Zuleiten des Elektrolyten aktiviert, sodass die Metall-Luft-Batterie vor ihrem Einsatz ohne Elektrolyten trocken gelagert wird, was ihre Langzeitstabilität verbessert.

In einer weiteren Ausgestaltung der Erfindung weist die Inertisierungsvorrichtung ferner einen Sensor auf, der mit der Steuereinheit verbunden ist und der einen Parameter erfasst, der mit im Raumvolumen gewünschten Inertisierungsbedingungen korreliert. Bevorzugt handelt es sich bei dem Sensor um einen Sauerstoffsensor zum Erfassen des Parameters in Form einer Sauerstoffkonzentration im Raumvolumen. Bei dieser Ausgestaltung kann die elektrochemische Reaktion der Metall-Luft-Batterie, insbesondere indirekt über die Leistung des elektrischen Verbrauchers in Abhängigkeit von der Sauerstoffkonzentration im Raumvolumen geregelt werden, um die Sauerstoffkonzentration auf ein gewünscht niedriges Niveau zu bringen. In diesem Zusammenhang können bei Anwendung der Inertisierungsvorrichtung zum Beispiel in einem Flugzeug die Leistung des elektrischen Verbrauchers und damit die elektrochemische Reaktion der Metall-Luft-Batterie auch in Abhängigkeit von der Flughöhe geregelt werden, sodass zum Beispiel in einem Landeanflug des Flugzeuges der erhöhte Sauerstoffanteil durch verstärktes Eindringen der Umgebungsluft berücksichtigt werden kann.

In einer weiteren Ausgestaltung der Erfindung weist die Inertisierungsvorrichtung ferner einen Drucksensor zum Erfassen des Druckanstieges beim Landeanflug auf. Bei dieser Ausgestaltung kann die elektrochemische Reaktion der Metall-Luft-Batterie, insbesondere indirekt über die Leistung des elektrischen Verbrauchers in Abhängigkeit von Druckanstieg im Raumvolumen geregelt werden, um die Sauerstoffkonzentration auf ein gewünscht niedriges Niveau zu bringen.

In einer noch weiteren Ausgestaltung der Erfindung weist die Inertisierungsvorrichtung ferner einen Temperatursensor zum Erfassen einer Lufttemperatur im Raum auf, der mit der Steuereinheit verbunden ist. Bei dieser Ausgestaltung können die Leistung des elektrischen Verbrauchers und damit die elektrochemische Reaktion der Metall-Luft-Batterie in Abhängigkeit von der Lufttemperatur im Raum geregelt werden. Diesem Aspekt liegt die Erkenntnis zugrunde, dass der Sauerstoffgehalt im Raumvolumen bei niedrigeren Temperaturen weniger stark reduziert werden muss, um den gewünschten Brandschutzeffekt zu erzielen.

Gemäß dem erfindungsgemäßen Verfahren zum Inertisieren eines Raumes wird einem Raumvolumen des Raumes durch den Ablauf einer elektrochemischen Reaktion einer Metall-Luft-Batterie bzw. während des Betriebs der erfindungsgemäßen Inertisierungsvorrichtung Sauerstoff entzogen.

Bezüglich der Vorteile, bevorzugten Ausgestaltungen und Begriffserläuterungen wird ergänzend auf die obigen Erklärungen in Zusammenhang mit der Inertisierungsvorrichtung der Erfindung verwiesen.

In einer Ausgestaltung der Erfindung wird während des Ablaufs der elektrochemischen Reaktion der Metall-Luft-Batterie ein Entladestrom der Metall-Luft-Batterie von einem elektrischen Verbraucher aufgenommen oder die Metall-Luft-Batterie kurzgeschlossen.

Gemäß der Erfindung wird die Metall-Luft-Batterie vor Beginn des Ablaufs der elektrochemischen Reaktion durch Zuführen eines Elektrolyten aus einem Elektrolytbehälter aktiviert.

In einer weiteren Ausgestaltung der Erfindung wird der Ablauf der elektrochemischen Reaktion der Metall-Luft-Batterie in Abhängigkeit von einer Sauerstoffkonzentration im Raumvolumen gesteuert.

In einer noch weiteren Ausgestaltung der Erfindung erfolgt der Ablauf der elektrochemischen Reaktion der Metall-Luft-Batterie in Abhängigkeit von einer Lufttemperatur im Raum. Insbesondere wird der Ablauf der elektrochemischen Reaktion der Metall-Luft-Batterie bei niedrigeren Lufttemperaturen im Raum weniger intensiv durchgeführt.

Die oben beschriebene Inertisierungsvorrichtung der Erfindung und das oben beschriebene Inertisierungsverfahren der Erfindung können vorzugsweise für ein Brandverhütungssystem, ein Brandbekämpfungssystem oder ein Brandverhütungs- und Brandbekämpfungssystem eingesetzt werden, aufgrund ihres reduzierten Gewichts- und Platzbedarfes besonders vorteilhaft für Luft- oder Raumfahrzeuge. Bei dem zu inertisierenden Raumvolumen handelt es sich dementsprechend zum Beispiel um einen Frachtraum, einen Aufenthaltsraum, eine Passagierkabine, ein Technikraum, ein freies Gasvolumen in einem Kraftstofftank oder dergleichen.

Die oben beschriebene Inertisierungsvorrichtung der Erfindung und das oben beschriebene Inertisierungsverfahren der Erfindung können bevorzugt auch in Kombination mit einem Feuerlöschsystem eingesetzt werden, das im Brandfall zum Beispiel ein Löschmittel (Flüssig, Gasförmig oder gemischt) zur Brandbekämpfung in den Raum einleitet.

Eine Inertisierungsanordnung umfasst einen ein Raumvolumen aufweisenden Raum sowie die oben beschriebene Vorrichtung zum Inertisieren des Raumes, die hinsichtlich ihrer Inertisierungswirkung auf das Raumvolumen abgestimmt ist. Insbesondere ist die Metall-Luft-Batterie derart dimensioniert, dass durch den Betrieb der Metall-Luft-Batterie das Raumvolumen inertisiert wird und somit insbesondere die Sauerstoffkonzentration innerhalb des Raumvolumens auf ein Niveau herabgesenkt und aufrechterhalten wird, bei dem ein im Raumvolumen vorhandener Brand eingedämmt oder gelöscht wird. Weiterhin wird die Metall-Luft-Batterie durch die Steuereinheit entsprechend angesteuert, insbesondere in Abhängigkeit des Vorliegens einer Brandsituation gestartet.

Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, größtenteils schematisch:
- Fig. 1: ein Inertisierungssystem zur Brandverhütung und/oder Brandbekämpfung gemäß einem Ausführungsbeispiel der Erfindung; und
- Fig. 2: ein Inertisierungssystem von Fig. 1 kombiniert mit einem Feuerlöschsystem zur Brandbekämpfung gemäß einem Ausführungsbeispiel der Erfindung; und
- Fig. 3: ein Inertisierungssystem von Fig. 1 mit einem weiteren Raumvolumen gemäß einem Ausführungsbeispiel der Erfindung.

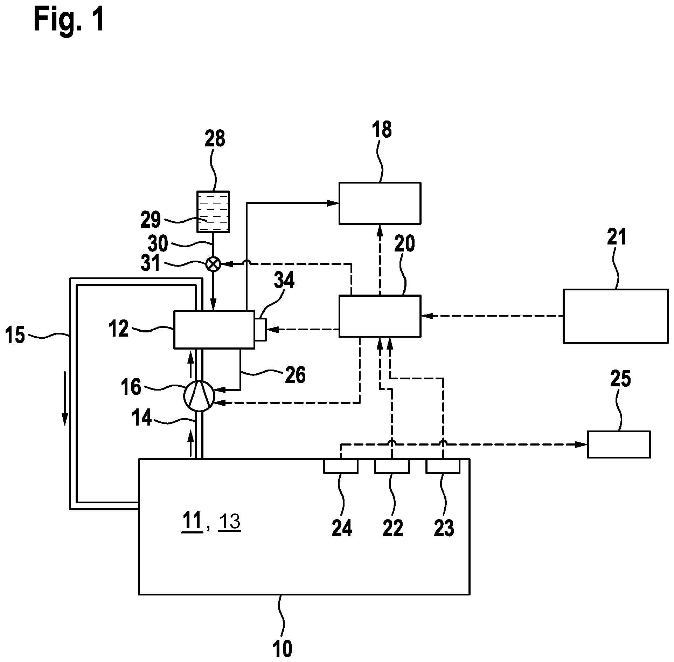

In Fig. 1 ist beispielhaft der Aufbau eines Ausführungsbeispiels eines Inertisierungssystems zur Brandverhütung und/oder Brandbekämpfung in einem Flugzeug einschließlich möglicher Ausführungsvarianten veranschaulicht.

Bei dem zu schützenden Raum 10 handelt es sich um einen geschlossenen Raum wie beispielsweise einen Frachtraum, einen Technikraum, eine Passagierkabine oder ein freies Gasvolumen in einem Kraftstofftank eines Flugzeugs. In dem Raum 10 befindet sich ein Luft-Raumvolumen 11 mit einem Sauerstoffanteil. Zur Reduzierung eines Brandrisikos oder zur Dämmung eines Brandes wird der Raum 10 mittels einer Initisierungsvorrichtung inertisiert.

Die erfindungsgemäße Inertisierungsvorrichtung enthält wenigstens eine Metall-Luft-Batterie 12, die über einen rohrleitungsförmigen Zuführkanal 14 mit einer Luftquelle 13, hier dem Raumvolumen 11 verbunden ist, damit die Metall-Luft-Batterie 12 beim Ablauf einer elektrochemischen Reaktion Sauerstoff aus dem Raumvolumen 11 ziehen kann. Bei Metall-Luft-Batterien wird die elektrische Energie durch eine elektrochemische Reaktion von Metallen mit Sauerstoff freigesetzt, wobei der Sauerstoff aus der Umgebung gewonnen wird. Um die Sauerstoffgewinnung aus dem Raumvolumen 11 zu unterstützen bzw. zu erleichtern, ist in dem Zuführkanal 14 vorzugsweise ein Lüfter 16 angeordnet, um den Luftstrom aus dem Raumvolumen 11 zur Metall-Luft-Batterie 12 zu fördern. Die Metall-Luft-Batterie 12 hat vorzugsweise eine hohe spezifische Energiedichte, ein geringes Gewicht und niedrige Materialkosten, wie zum Beispiel eine Aluminium-Luft-Batterie. Es können aber auch andere Metall-Luft-Batterien wie beispielsweise Lithium-Luft-Batterien, Zink-Luft-Batterien, etc. verwendet werden.

Die Funktion der Stromgenerierung steht bei dieser Batterie nicht im Vordergrund. Wesentlich ist der Verbrauch von Sauerstoff durch eine kontrollierte elektrochemische Metall-Sauerstoff Reaktion. Die Metall-Luft-Batterie 12 kann auch intern kurzgeschlossen sein durch eine minderwertige oder nicht vorhandene Membran. Der Start der elektrochemischen Reaktion und somit der Inertisierung erfolgt dann durch Einbringung eines Elektrolyten in einen Reaktionsraum der Metall-Luft-Batterie 12.

Wie in Fig. 1 dargestellt, ist in diesem Ausführungsbeispiel ein elektrischer Verbraucher 18 an die Metall-Luft-Batterie 12 angeschlossen. Der elektrische Verbraucher 18 benötigt bei seinem Betrieb elektrische Energie, die er aus der Metall-Luft-Batterie 12 nimmt, die dadurch entladen wird und bei diesem Entladevorgang Sauerstoff aus dem Raumvolumen 11 nimmt. Wenn der elektrische Verbraucher 18 durch eine Steuereinheit 20 in Betrieb genommen wird, wird der Entladevorgang und damit die elektrochemische Reaktion der Metall-Luft-Batterie 12 gestartet. Da bei der elektrochemischen Reaktion Sauerstoff der zugeführten Luft verbraucht wird, wird hierdurch der Sauerstoffanteil im Raumvolumen 11 reduziert. Der elektrische Verbraucher 18 ist so dimensioniert, dass der für das Inertisieren des Raumes 10 benötigte Sauerstoffverbrauch der Metall-Luft-Batterie 12 erreicht werden kann. Optional kann auch ein geregelter Verbraucher 18 eingesetzt werden, der unabhängig von der Batteriespannung eine konstante Leistung hat. Optional können auch mehrere elektrische Verbraucher 18 an die Metall-Luft-Batterie 12 angeschlossen sein.

Die Inertisierungsvorrichtung verfügt in diesem Ausführungsbeispiel über einen Sauerstoffsensor 22 zum Erfassen einer Sauerstoffkonzentration im Raumvolumen 11, einen Temperatursensor 23 zum Erfassen einer Lufttemperatur im Raum 10. Ferner ist in dem Raum 10 ein Feuermelder 24 zum Erfassen eines Brandes im Raum 10 angeordnet. Der Sauerstoffsensor 22 und der Temperatursensor 23 sind mit der Steuereinheit 20 kabellos oder leitungsgebunden verbunden. Der Feuermelder 24 ist mit einer Anzeigeeinheit 25 im Cockpit des Flugzeugs verbunden. Hiermit wird ein Bediener, insbesondere der Pilot über das Vorliegen einer Brandsituation im Raum 11 informiert. Über ein Bedienelement 21, welches mit der Steuereinheit 20 verbunden ist, kann der Pilot wiederum der Inertisierungsvorrichtung das Signal geben, dass eine Brandsituation vorliegt und somit den Betrieb der Inertisierungsvorrichtung starten.

Die Steuereinheit 20 kann sodann in Abhängigkeit der Brandsituation den elektrischen Verbraucher 18 starten und im weiteren Verlauf die Leistungsaufnahme des elektrischen Verbrauchers 18 und damit die Entladungsstärke der Metall-Luft-Batterie in Abhängigkeit von der Sauerstoffkonzentration im Raumvolumen 11 und der Lufttemperatur im Raum 10 regeln. Auf diese Weise kann insbesondere erreicht werden, dass der Sauerstoffgehalt im Raum 10 einen vorgegebenen Grenzwert nicht überschreitet, wobei dieser Grenzwert bei niedrigeren Lufttemperaturen etwas ansteigt. Außerdem kann das Inertisierungsmaß bei Erkennen eines Brandes im Raum 10 im Vergleich zur Brandverhütung ohne Brand im Raum 10 erhöht werden, um die Brandbekämpfung zu unterstützen.

Zur Brandbekämpfung kann der Betrieb der Inertisierungsvorrichtung nach der Aktivierung einer Feuerlöschung, zum Beispiel etwas zeitverzögert nach der Einleitung der Löschmittel (Gas, flüssig oder Gemischt) oder gleichzeitig, gestartet werden. Insbesondere kann die Inertisierungsvorrichtung verwendet werden, um eine Inertamosphäre, die z.B. durch eine Gaseinleitung erzeugt wurde, über einen längeren Zeitraum in einem Löschvolumen aufrechtzuerhalten. Dieser Zeitraum ist bei Flugzeugen die Zeit bis zur sicheren Landung.

Es werden nun einige optionale Varianten der beschriebenen Ausführungsform näher erläutert, die zum Teil ebenfalls in Fig. 1 dargestellt sind.

Im Ausführungsbeispiel von Fig. 1 ist die Metall-Luft-Batterie 12 entfernt von dem Raum 10 platziert und über einen Zuführkanal 14 in Form einer Rohrleitung mit dem Raum 10 verbunden, in dem ein Lüfter 16 zum Fördern des Luftstroms angeordnet ist. Die sauerstoffabgereicherte Luft wird über den Abführkanal 15 in das Raumvolumen 11 zurückgeführt. Alternativ kann die Metall-Luft-Batterie 12 auch direkt an zum Beispiel einer Raumwand des Raumes 10 montiert sein und mit dem Rauminnern über einen Zuführkanal 14 in Form einer Wandöffnung verbunden sein. In diesem Fall kann gegebenenfalls auf den Lüfter 16 verzichtet werden.

In Ausführungsformen mit einem Lüfter 16 im Zuführkanal 14 besteht zudem die Möglichkeit, dass die Stromversorgung des Lüfters 16 aus der Batteriespannung der Metall-Luft-Batterie 12 erfolgt. Wie in Fig. 1 angedeutet, kann eine entsprechende Stromversorgungsleitung 26 vorgesehen sein, die den Lüfter 16 mit der Metall-Luft-Batterie 12 verbindet.

Es ist bekannt, dass Metall-Luft-Batterien meist nur eine geringe Langzeitstabilität haben. Im erfindungsgemäßen Inertisierungssystem kann die Metall-Luft-Batterie 12 aber bevorzugt trocken gelagert werden. D.h. die Metall-Luft-Batterie 12 ist ohne Elektrolyten gelagert und wird erst beim benötigten Einsatz zur Brandverhütung oder Brandbekämpfung durch Einleiten eines Elektrolyten in die Batterie 12 aktiviert. Wie in Fig. 1 veranschaulicht, weist die Inertisierungsvorrichtung zu diesem Zweck zum Beispiel einen Elektrolytbehälter 28 auf, in dem ein Elektrolyt (z.B. Salzwasser) 29 gespeichert ist. Der Elektrolytbehälter 28 ist über eine Leitung (z.B. Rohrleitung oder Schlauchleitung) 30 mit der Metall-Luft-Batterie 12 verbunden. In oder an dieser Leitung 30 ist zudem ein Förderelement 31 zum Fördern des Elektrolyten 29 aus dem Elektrolytbehälter 28 in die Metall-Luft-Batterie 12 angebracht. Das Förderelement 31 weist zum Beispiel ein Ventil und/oder eine Pumpe auf. Das Förderelement 31 wird von der Steuereinheit 20 angesteuert, um die Metall-Luft-Batterie 12 bei Bedarf zu aktivieren. In einer alternativen Ausführungsvariante, kann der Elektrolyt 29 auch innerhalb der Metall-Luft-Batterie 12 zum Beispiel in einer Glasampulle gespeichert sein und kann das Förderelement 31 zum Beispiel ein Bolzen oder eine Pyroladung sein, der die Glasampulle bei Bedarf zerbricht, um die Metall-Luft-Batterie 12 zu aktivieren.

Im Ausführungsbeispiel von Fig. 1 ist wenigstens ein elektrischer Verbraucher 18 an die Metall-Luft-Batterie 12 angeschlossen, um den den Sauerstoffentzug aus dem Raum 10 erzeugenden Entladevorgang auszuführen. Alternativ oder zusätzlich kann die Metall-Luft-Batterie 12 auch mit einer Kurzschlussschaltung 34 versehen sein, die innerhalb oder außerhalb der Metall-Luft-Batterie 12 angeordnet ist. Die Kurzschlussschaltung 34 wird bei Bedarf von der Steuereinheit 20 angesteuert, um die Elektroden der Metall-Luft-Batterie 12 kurzzuschließen und so den Entladevorgang auszuführen.

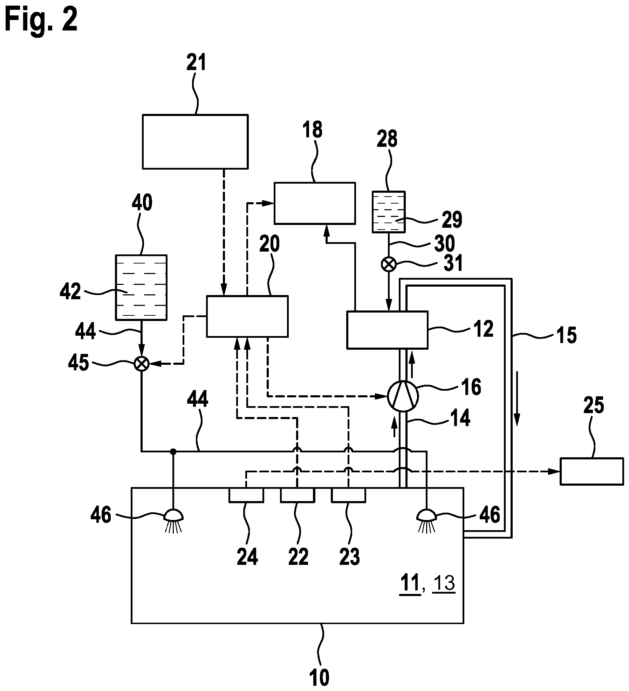

Fig. 2 zeigt ein weiteres Ausführungsbeispiel der Erfindung, bei dem die oben beschriebene Inertisierungsvorrichtung von Fig. 1 mit einem Feuerlöschsystem zur Brandbekämpfung kombiniert ist. Dabei sind gleiche oder entsprechende Komponenten mit den gleichen Bezugsziffern wie in Fig. 1 versehen.

Die Inertisierungsvorrichtung enthält insbesondere wenigstens eine Metall-Luft-Batterie 12, die mit dem Raumvolumen 11 über einen Zuführkanal 14 verbunden ist, wenigstens einen elektrischen Verbraucher 18, der an die Metall-Luft-Batterie angeschlossen ist, und eine Steuereinrichtung 20. Wie in Fig. 2 dargestellt, kann die Inertisierungsvorrichtung zudem je nach Ausführungsvariante einen Elektrolytbehälter 28, eine Kurzschlussschaltung 34, einen Sauerstoffsensor 22, einen Temperatursensor 23 und einen Feuermelder 24 enthalten.

Das Feuerlöschsystem weist in diesem Ausführungsbeispiel einen Löschmitteltank 40 zum Vorhalten eines Löschmittels (z.B. Löschwasser, Stickstoff, Inertgas, Wassernebel oder eine Kombination davon) 42 auf. Das Feuerlöschsystem hat zudem eine Löschmittelleitung 44, die einerseits mit dem Löschmitteltank 40 verbunden ist und andererseits an einer oder mehreren Auslassöffnungen 46 im Innern des Raumes 10 endet, um das Flüssiglöschmittel 42 zur Brandbekämpfung in den Raum 10 einzuleiten.

In der Löschmittelleitung 44 ist vorzugsweise auch ein Ventil 45 angeordnet, um das Löschmittel 42 vom bedruckten Löschmitteltank 40 zu den Auslassöffnungen 46 im Raum 10 zu fördern. Wie in Fig. 2 angedeutet, wird dieses Ventil 45 vorzugsweise ebenfalls von der Steuereinheit 20 der Inertisierungsvorrichtung angesteuert. D.h. die Steuereinheit 20 ist eine gemeinsame Steuereinheit für die Inertisierungsvorrichtung und das Feuerlöschsystem.

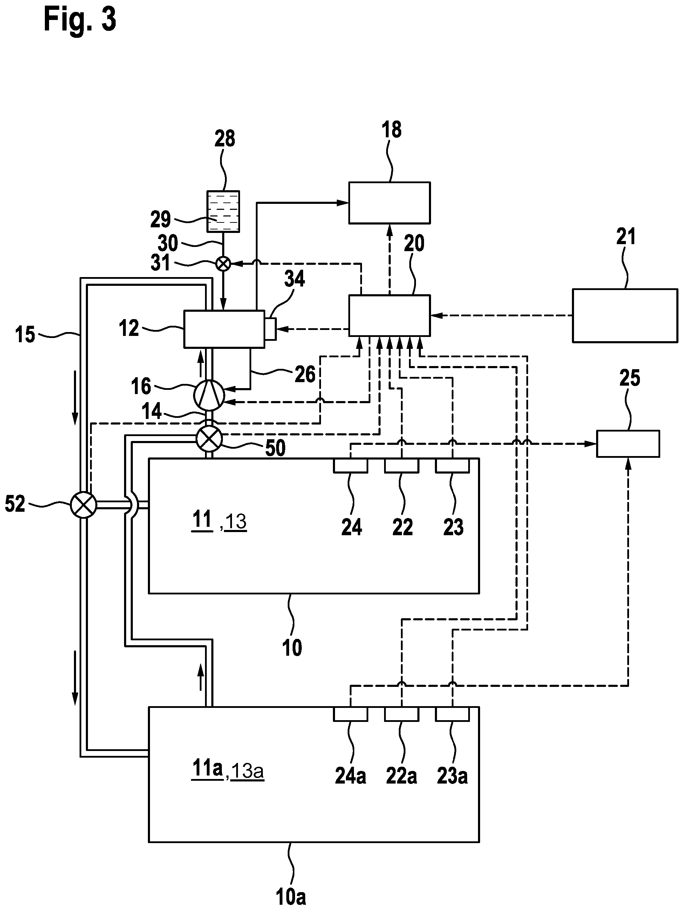

Fig. 3 zeigt ein Ausführungsbeispiel der Erfindung analog Fig. 1, bei dem die Metall-Luft-Batterie 12 jedoch einem weiteren ein Raumvolumen 11a aufweisenden Raum 10a zugeordnet ist. Der Raum 10a stellt in diesem Fall auch eine weitere Luftquelle 13a dar. In dem Raum sind ein Sauerstoffsensor 22a, ein Temperatursensor 23a und ein Feuermelder 24a angeordnet. Der Sauerstoffsensor 22a und der Temperatursensor 23a sind mit der Steuereinheit 20 kabellos oder leitungsgebunden verbunden. Der Feuermelder 24a ist mit der Anzeigeeinheit 25 im Cockpit des Flugzeugs verbunden.

In diesem Fall werden die Zuführkanäle 14 bzw. Abführkanäle 15 durch dann ein Rohrsystem gebildet. Das Rohrsystem weist Ventile 50, 52 auf, durch die der zu inertisierende Raum 10,10a bzw. das zu inertisierende Volumen 11,11aausgewählt werden kann. Die Ventile 50,52 sind insbesondere mit der Steuereinheit 20 ansteuerbar und können mit dieser geschlossen oder geöffnet werden.

### BEZUGSZIFFERNLISTE

- 10,10a: (geschlossener) Raum
- 11,11a: Raumvolumen
- 12: Metall-Luft-Batterie
- 13,13a: Luftquelle
- 14: Zuführkanal
- 15: Abführkanal
- 16: Lüfter
- 18: (elektrischer) Verbraucher
- 21: Bedienelement
- 20: Steuereinheit
- 22,22a: Sauerstoffsensor
- 23,23a: Temperatursensor
- 24,24a: Feuermelder
- 25: Anzeigeeinheit
- 26: Stromversorgungsleitung
- 28: Elektrolytbehälter
- 29: Elektrolyt
- 30: Leitung
- 31: Förderelement
- 34: Kurzschlussschaltung
- 40: Löschmitteltank
- 42: Löschmittel
- 44: Löschmittelleitung
- 45: Ventil
- 46: Auslassöffnung

## Patentansprüche

1. Vorrichtung zum Inertisieren oder Aufrechterhalten einer Inertisierung eines Raumes (10,10a) eines Luft- oder Raumfahrzeuges, aufweisend:
- eine Metall-Luft-Batterie (12), die vor ihrem Einsatz zur Brandverhütung oder Brandbekämpfung ohne Elektrolyten (29) trocken gelagert ist und erst beim benötigten Einsatz zur Brandverhütung oder Brandbekämpfung durch Einleiten des Elektrolyten (29) in die Metall-Luft-Batterie (12) aktiviert wird;
- einen Zuführkanal (14) zum Zuführen von Luft,
- wobei der Zuführkanal (14) eine Luftquelle (13,13a) mit der Metall-Luft-Batterie (12) verbindet;
- einen Abführkanal (15) zum Abführen von Luft,
- wobei der Abführkanal (15) die Metall-Luft-Batterie (12) mit einem Raumvolumen (11,11a) des Raumes (10,10a) verbindet;
- einen Elektrolytbehälter (28) zum Speichern eines Elektrolyten (29); und
- ein Förderelement (31) zum Fördern des Elektrolyten (29) aus dem Elektrolytbehälter (28) in die Metall-Luft-Batterie (12); und
- eine Steuereinheit (20) zum Steuern der elektrochemischen Reaktion der Metall-Luft-Batterie (12) in Abhängigkeit einer Brandsituation innerhalb des Raumes (11,11a),
- wobei die Steuereinheit (20) derart ausgebildet ist, dass bei Vorliegen einer Brandsituation innerhalb des Raumes (10,10a) die elektrochemische Reaktion der Metall-Luft-Batterie (12) gestartet wird,
- wobei die Steuereinheit (20) zum Steuern des Förderelements (31) ausgestaltet ist, um die Metall-Luft-Batterie (12) erst vor dem Entladevorgang durch Zuleiten des Elektrolyten (29) zu aktivieren,
- wobei die Vorrichtung dazu ausgebildet ist, dem Raumvolumen (11,11a) zur Reduzierung des Sauerstoffanteils ein Inertgas zuzuführen, welches durch die Metall-Luft-Batterie (12) gebildet wird und dem Raumvolumen (11,11a) durch den Abführkanal (15) zugeleitet wird.

2. Inertisierungsvorrichtung nach Anspruch 1, bei der der Raum (10,10a) die Luftquelle (13,13a) bildet.

3. Inertisierungsvorrichtung nach Anspruch 1 oder 2, ferner aufweisend:
einen elektrischen Verbraucher (18), der an die Metall-Luft-Batterie (12) angeschlossen ist, wobei die Steuereinheit (20) zum Steuern eines Betriebs des elektrischen Verbrauchers (18) ausgestaltet ist.

4. Inertisierungsvorrichtung nach einem der vorhergehenden Ansprüche, ferner aufweisend:
eine Kurzschlussschaltung (34) zum wahlweisen Kurzschließen der Metall-Luft-Batterie (12), wobei die Steuereinheit (20) zum Ansteuern der Kurzschlussschaltung (34) ausgestaltet ist.

5. Inertisierungsvorrichtung nach einem der vorhergehenden Ansprüche, ferner aufweisend:
einen Lüfter (16), der in dem Zuführkanal (14) angeordnet ist, um einen Luftstrom aus dem Raumvolumen (11,11a) zur Metall-Luft-Batterie (12) zu fördern.

6. Inertisierungsvorrichtung nach Anspruch 5, bei welcher
der Lüfter (16) zu dessen Stromversorgung mit der Metall-Luft-Batterie (12) verbunden ist.

7. Inertisierungsvorrichtung nach einem der vorhergehenden Ansprüche, ferner aufweisend:
einen Sensor (22,22a,23,23a) zum Erfassen eines mit im Raumvolumen (11,11a) gewünschten Inertisierungsbedingungen korrelierten Paramters, der mit der Steuereinheit (20) verbunden ist.

8. Verfahren zum Inertisieren oder Aufrechterhalten einer Inertisierung eines Raumes (10,10a) eines Luft- oder Raumfahrzeuges, bei welchem einem Raumvolumen (11,11a) des Raumes (10,10a) durch den Ablauf einer elektrochemischen Reaktion einer Metall-Luft-Batterie (12) Sauerstoff entzogen wird,
wobei die Metall-Luft-Batterie (12) vor Beginn des Ablaufs der elektrochemischen Reaktion durch Zuführen eines Elektrolyten (29) aus einem Elektrolytbehälter (28) aktiviert wird und die Metall-Luft-Batterie (12) vor ihrem Einsatz ohne Elektrolyten (29) trocken gelagert wird.

9. Verfahren nach Anspruch 8, bei welchem
während des Ablaufs der elektrochemischen Reaktion der Metall-Luft-Batterie (12) ein Entladestrom der Metall-Luft-Batterie (12) von einem elektrischen Verbraucher (18) aufgenommen wird oder die Metall-Luft-Batterie (12) kurzgeschlossen wird.

10. Verfahren nach einem der Ansprüche 8 bis 9, bei welchem
der Ablauf der elektrochemischen Reaktion der Metall-Luft-Batterie (12) in Abhängigkeit von einer Sauerstoffkonzentration im Raumvolumen (11,11a) gesteuert wird.

11. Verfahren nach einem der Ansprüche 8 bis 10, bei welchem der Ablauf der elektrochemischen Reaktion der Metall-Luft-Batterie (12) in Abhängigkeit von einer Lufttemperatur im Raum (10,10a) erfolgt.

12. Verwendung der Inertisierungsvorrichtung nach einem der Ansprüche 1 bis 7 oder des Inertisierungsverfahrens nach einem der Ansprüche 8 bis 11 für ein Brandverhütungssystem, ein Brandbekämpfungssystem oder ein Brandverhütungs- und Brandbekämpfungssystem für Luft- oder Raumfahrzeuge.

13. Inertisierungsanordnung, umfassend einen ein Raumvolumen (11,11a) aufweisenden Raum (10,10a) eines Luft- oder Raumfahrzeuges sowie eine Inertisierungsvorrichtung nach einem der Ansprüche 1 bis 7, die hinsichtlich ihrer Inertisierungswirkung auf das Raumvolumen abgestimmt ist.

14. Luft- oder Raumfahrzeug aufweisend ein zu inertisierendes Raumvolumen (11,11a) und eine Inertisierungsvorrichtung nach einem der Ansprüche 1 bis 7.

## Claims

1. Apparatus for inerting or maintaining the inerting of a space (10, 10a) of an aircraft or spacecraft, comprising:
- a metal-air battery (12) which before being used for fire prevention or fire fighting is stored dry without electrolyte (29) and which only when it needs to be used for fire prevention or fire fighting is activated by introduction of the electrolyte (29) into the metal-air battery (12);
- a feed channel (14) for the introduction of air,
- where the feed channel (14) connects an air source (13, 13a) to the metal-air battery (12);
- a discharge channel (15) for the discharge of air,
- where the discharge channel (15) connects the metal-air battery (12) to a volume (11, 11a) of the space (10, 10a);
- an electrolyte container (28) for storing an electrolyte (29); and
- a transport element (31) for conveying the electrolyte (29) from the electrolyte container (28) into the metal-air battery (12); and
- a control unit (20) for controlling the electrochemical reaction of the metal-air battery (12) as a function of a fire situation within the space (11, 11a),
- where the control unit (20) is designed in such a way that in the presence of a fire situation within the space (10, 10a), the electrochemical reaction of the metal-air battery (12) is initiated,
- where the control unit (20) is configured for controlling the transport element (31) in order to activate the metal-air battery (12) by introduction of the electrolyte (29) before commencement of the discharging operation,
- where the apparatus is designed to supply the volume (11, 11a) of the space, for the purpose of reducing the oxygen fraction, with an inert gas which is formed by the metal-air battery (12) and is passed to the volume (11, 11a) of the space through the discharge channel (15).

2. Inerting apparatus according to Claim 1, wherein the space (10, 10a) forms the air source (13, 13a).

3. Inerting apparatus according to Claim 1 or 2, further comprising:
an electric load (18) which is connected to the metal-air battery (12), where the control unit (20) is configured for controlling operation of the electric load (18).

4. Inerting apparatus according to any of the preceding claims, further comprising:
a short circuit switch (34) for selective short-circuiting of the metal-air battery (12), where the control unit (20) is configured for actuating the short circuit switch (34).

5. Inerting apparatus according to any of the preceding claims, further comprising:
a blower (16) which is arranged in the feed channel (14) in order to convey an air stream from the volume (11, 11a) of the space to the metal-air battery (12) .

6. Inerting apparatus according to Claim 5, wherein the blower (16) is connected to the metal-air battery (12) in order to be supplied with power.

7. Inerting apparatus according to any of the preceding claims, further comprising:
a sensor (22, 22a, 23, 23a) for measuring a parameter correlated with inerting conditions desired in the volume (11, 11a) of the space, which sensor is connected to the control unit (20).

8. Method for inerting or maintaining the inerting of a space (10, 10a) of an aircraft or spacecraft, wherein oxygen is withdrawn from a volume (11, 11a) of the space (10, 10a) by occurrence of an electrochemical reaction of a metal-air battery (12),
where the metal-air battery (12) is activated before the start of the occurrence of the electrochemical reaction by feeding of an electrolyte (29) from an electrolyte container (28) and before being used the metal-air battery (12) is stored dry without electrolyte (29).

9. Method according to Claim 8, wherein
during the occurrence of the electrochemical reaction of the metal-air battery (12), a discharge current of the metal-air battery (12) is taken up by an electric load (18) or the metal-air battery (12) is short-circuited.

10. Method according to either of Claims 8 and 9, wherein
the occurrence of the electrochemical reaction of the metal-air battery (12) is controlled as a function of an oxygen concentration in the volume (11, 11a) of the space.

11. Method according to any of Claims 8 to 10, wherein the occurrence of the electrochemical reaction of the metal-air battery (12) proceeds as a function of an air temperature in the space (10, 10a).

12. Use of the inerting apparatus according to any of Claims 1 to 7 or the inerting method according to any of Claims 8 to 11 for a fire prevention system, a firefighting system or a fire prevention and firefighting system, for aircraft or spacecraft.

13. Inerting system comprising a space (10, 10a) having a volume (11, 11a) in an aircraft or spacecraft, and also an inerting apparatus according to any of Claims 1 to 7 which is matched in respect of its inerting action to the volume of the space.

14. Aircraft or spacecraft having a volume (11, 11a) of the space to be inerted and an inerting apparatus according to any of Claims 1 to 7.

## Revendications

1. Dispositif d'inertage ou de maintien d'un inertage d'un compartiment (10, 10a) d'un aéronef ou d'un engin spatial, ledit dispositif comportant :
- une batterie métal-air (12) qui est stockée au sec avant d'être utilisée pour la prévention ou la lutte contre les incendies sans électrolyte (29) et qui est activée uniquement lorsque cela est nécessaire pour la prévention ou la lutte contre les incendies par introduction de l'électrolyte (29) dans la batterie métal-air (12) ;
- un conduit d'alimentation (14) destiné à l'alimentation en air,
- le conduit d'alimentation (14) reliant une source d'air (13, 13a) à la batterie métal-air (12) ;
- un conduit d'évacuation (15) destiné à évacuer l'air,
- le conduit d'évacuation (15) reliant la batterie métal-air (12) à un volume (11, 11a) du compartiment (10, 10a) ;
- un conteneur d'électrolyte (28) destiné à stocker un électrolyte (29) ; et
- un élément de transport (31) destiné à transporter l'électrolyte (29) du conteneur d'électrolyte (28) jusque dans la batterie métal-air (12) ; et
- une unité de commande (20) destinée à commander la réaction électrochimique de la batterie métal-air (12) en fonction d'une situation d'incendie à l'intérieur du compartiment (11, 11a),
- l'unité de commande (20) étant conçue de manière à ce que la réaction électrochimique de la batterie métal-air (12) soit déclenchée en cas d'incendie à l'intérieur du compartiment (10, 10a),
- l'unité de commande (20) étant conçue pour commander l'élément de transport (31) afin d'activer la batterie métal-air (12) uniquement avant le processus d'évacuation par amenée de l'électrolyte (29),
- le dispositif étant conçu pour fournir un gaz inerte au volume (11, 11a) afin de réduire la proportion d'oxygène qui est formée par la batterie métal-air (12) et qui est amenée au volume de compartiment (11, 11a) par le biais du conduit d'évacuation (15).

2. Dispositif d'inertage selon la revendication 1, le compartiment (10, 10a) formant la source d'air (13, 13a).

3. Dispositif d'inertage selon la revendication 1 ou 2, comportant en outre :
un consommateur électrique (18) qui est raccordé à la batterie métal-air (12), l'unité de commande (20) étant conçue pour commander un fonctionnement du consommateur électrique (18).

4. Dispositif d'inertage selon l'une des revendications précédentes, comportant en outre :
un court-circuit (34) destiné à court-circuiter sélectivement la batterie métal-air (12), l'unité de commande (20) étant conçue pour commander le court-circuit (34).

5. Dispositif d'inertage selon l'une des revendications précédentes, comportant en outre :
un ventilateur (16) qui est disposé dans le conduit d'alimentation (14) afin de favoriser un écoulement d'air depuis le volume de compartiment (11, 11a) vers la batterie métal-air (12).

6. Dispositif d'inertage selon la revendication 5, dans lequel le ventilateur (16) est relié à la batterie métal-air (12) afin d'alimenter celui-ci.

7. Dispositif d'inertage selon l'une des revendications précédentes, comportant en outre :
un capteur (22, 22a, 23, 23a) qui est destiné à détecter un paramètre corrélé aux conditions d'inertage souhaitées dans le volume de compartiment (11, 11a) et qui est relié à l'unité de commande (20).

8. Procédé d'inertage ou de maintien d'un inertage d'un compartiment (10, 10a) d'un aéronef ou d'un engin spatial, procédé dans lequel l'oxygène est retiré d'un volume (11, 11a) du compartiment (10, 10a) au cours d'une réaction électrochimique d'une batterie métal-air (12), la batterie métal-air (12) étant activée avant le début de la réaction électrochimique par amenée d'un électrolyte (29) depuis un conteneur d'électrolyte (28) et la batterie métal-air (12) étant stockée au sec avant d'être utilisée sans électrolyte (29).

9. Procédé selon la revendication 8, dans lequel au cours de la réaction électrochimique de la batterie métal-air (12), un courant de décharge de la batterie métal-air (12) est absorbé par un consommateur électrique (18) ou la batterie métal-air (12) est court-circuitée.

10. Procédé selon l'une des revendications 8 et 9, dans lequel le déroulement de la réaction électrochimique de la batterie métal-air (12) est commandé en fonction d'une concentration en oxygène dans le volume de compartiment (11, 11a).

11. Procédé selon l'une des revendications 8 à 10, dans lequel la réaction électrochimique de la batterie métal-air (12) est effectuée en fonction de la température de l'air dans le compartiment (10, 10a).

12. Utilisation du dispositif d'inertage selon l'une des revendications 1 à 7 ou du procédé d'inertage selon l'une des revendications 8 à 11 dans un système de prévention contre les incendies, un système de lutte contre les incendies ou un système de prévention et de lutte contre les incendies destiné à des aéronefs ou des engins spatiaux.

13. Ensemble d'inertage comprenant un compartiment (10, 10a) d'un aéronef ou d'un engin spatial comportant un volume de compartiment (11, 11a) et un dispositif d'inertage selon l'une des revendications 1 à 7, qui est adapté au volume de compartiment en termes d'effet d'inertage de celui-ci.

14. Aéronef ou engin spatial comportant un volume de compartiment (11, 11a) à inerter et un dispositif d'inertage selon l'une des revendications 1 à 7.
